# EUROPEAN PATENT APPLICATION

(11) **EP 1 075 114 A2**
(43) Date of publication of application: **07.02.2001**
(21) Application number: 00116426.8
(22) Date of filing: 28.07.2000
(51) Int. Cl.: H04L 12/56, G06F 11/00, G06F 11/14

(54) **Method and apparatus of automatically restoring set information**

(30) Priority: 29.07.1999 JP 21473699
(71) Applicant: NEC CORPORATION, Tokyo (JP)
(72) Inventor: Hayashi, Yasuhiro, c/o NEC Corporation, Tokyo (JP); Kido, Masahiro, c/o NEC Corporation, Tokyo (JP); Hasei, Shinji, c/o NEC Software Chugoku, Ltd., Hiroshima-shi, Hiroshima (JP)
(74) Representative: Betten & Resch

(57) **Abstract**

A method and apparatus of set information automatic restoring is provided which is capable of automatically restoring wrongly set information to correct set information when a function of setting a set information in a set information inputting system becomes disabled due to wrongly set information and a storage medium storing a set information automatic restoring program is also provided.

Set information is input into a set information change processing section from an operating terminal (20) through a network (30) and is stored in a set information storing section (45). If the set information change processing section does not receive a change confirming instruction of the set information from the operating terminal (20) through the network (30) before a predetermined time has elapsed since a time when the set information is set, the set information change processing section (42) reads the set information stored in a preliminary set information storing section (43) and stores read set information into the set information storing section (45).

## Description

### BACKGROUND OF THE INVENTION

### Field of the Invention

The present invention relates to a method and apparatus of set information automatic restoring and a storage medium storing a set information automatic restoring program and more particularly to the method and apparatus of set information automatic restoring to restore wrongly set information to correctly set information and to the storage medium for storing the set information automatic restoring program.

### Description of the Related Art

A computer device such as a router being operable in accordance with set information is connected to a plurality of networks. Setting of the set information to the computer device is performed through the network by an operational terminal connected to the network. The computer device to which the set information has been set is made operable in an operation mode designated by the set information. A network system through which such set information described above is set is disclosed in Japanese Patent Application Laid-open No. Hei9-168009. Another network system is disclosed in Japanese Patent Application Laid-open No. Hei6-110663 in which set information can be set to any device without actually going to a site where such device is installed. According to this Patent Application, although additional setting or overwriting setting of new information to an existing set information is made possible, setting for partial deletion or changing of the existing set information is impossible. This shortcoming is attempted to be overcome by the above Japanese Patent Application Laid-open No. Hei9-168009.

That is, the network system disclosed in this Patent Application is provided with a designing mechanism and an automatic setting mechanism. A set mechanism has a function of inputting and editing information to be fed to an object for setting, of creating strings of commands adapted to add, delete and/or update information, of storing created strings of commands into a file and of fetching the strings of commands from the file so as to input and edit the set information. The automatic setting mechanism has a function of fetching the strings of commands which have been created and stored into the file by the above setting mechanism, of setting the information to the object for setting in accordance with the commands, of fetching information which has been set from the object for setting, of creating strings of commands to execute editing operations including addition, deletion and change of the information based on the fetched information and of collecting the information to store the created command strings into the file. By configuring as described above, partial deletion or partial change of information which has been set is made possible.

Moreover, it is also described in the above Japanese Patent Application Laid-open No. Hei9-168009 that the automatic setting mechanism has a function of restoring the setting. That is, by this function, at the time of creating strings of commands which perform editing operations including addition, deletion, change or a like of the set information, every time the creation is successful, a restoring command which returns the command to its original state is created and, if the creation is not successful, the operation is returned, by reading the restoring command in reverse order, to a state existing before the automatic setting mechanism is activated.

However, the conventional technology as disclosed in the above Patent Application has problems in that, although partial deletion and/or partial change of the set information are possible, if the set information is in error and the correction of the wrong setting by the above designing mechanism is impossible, a measure to restore the wrongly set information to a correctly set information cannot be automatically and totally taken. That is, when the set information is wrongly set, though operations of the automatic setting mechanism are returned to its original state by the setting restoring function, when the set information is wrongly set by the designing mechanism and the measure to restore the set information to the correct set information cannot be taken, it is impossible to automatically redo the setting of the wrongly set information so as to have the correct information.

### SUMMARY OF THE INVENTION

In view of the above, it is an object of the present invention to provide a method and apparatus of set information automatic restoring capable of automatically restoring wrongly set information to correct set information when a setting function of the set information in a set information inputting system becomes disabled due to wrongly set information and a storage medium storing a set information automatic restoring program.

According to a first aspect of the present invention, there is provided a method of automatically restoring set information that has been changed and is being currently used to its original set information in a system so configured as to be operable in accordance with the set information already set and then changed, including steps of:
storing the original set information to a system;
inputting the set information to be set and setting it to the system;
measuring time elapsed after a time when the set information to be set has been set; and
   whereby setting of the original set information stored in the system to the system is redone when confirming information of the set information which has been set and is being used is not input after measured time reaches a predetermined time.

In the foregoing, a preferable mode is one that wherein includes a step of using a means for operating the system even when the confirming information is not input before the predetermined time has elapsed due to an error contained in the set information that has been changed.

Also, a preferable mode is one that wherein includes a step of using a means for operating the system even when the confirming information is not input after time required for performing a specific operation in accordance with the set information that has been changed reaches the predetermined time.

Also, a preferable mode is one that wherein includes a step of storing the set information to the system when the confirming information is input before the time required for performing the specific operation in accordance with the set information that has been changed reaches the predetermined time.

Also, a preferable mode is one that wherein includes a step of inputting the set information through a network to which the system is connected.

Furthermore, a preferable mode is one that wherein includes a step of inputting the set information through a means for inputting the set information provided in the system.

According to a second aspect of the present invention, there is provided an apparatus for automatically restoring set information which is changed and is currently used to original set information in a system so configured as to be operable in accordance with the set information which is set and changed, characterized by comprising:
a storing means for storing the original set information in the system;
an inputting means for inputting the set information to be set and for setting the set information to the system;
a measuring means for measuring an elapsed time after the set information to be set is set; and
a setting means for resetting the original set information stored in the system by the storing means in the system when confirming information of the set information that is set and used is not input though the elapsed time measured by the measuring means reaches the predetermined time.

In the foregoing, a preferable mode is one wherein the setting means operates when the confirming information is not input until the predetermined time elapses due to an error contained in the set information that is changed.

Also, a preferable mode is one wherein the setting means operates when the confirming information is not input though a required time for performing a specific operation in accordance with the set information that is changed reaches the predetermined time.

Also, a preferable mode is one wherein the storing means further stores the set information to the system when the confirming information is input before the elapsed time reaches the predetermined time.

Also, a preferable mode is one wherein the inputting means is connected to the system through a network.

Also, a preferable mode is one wherein the inputting means is a set information inputting means in the system.

According to a third aspect of the present invention, there is provided a computer-readable storage medium storing a set information automatic restoring program that allows a function described above to be executed by a computer.

### BRIEF DESCRIPTION OF THE DRAWINGS

The above and other objects, advantages and features of the present invention will be more apparent from the following description taken in Conjunction with the accompanying drawings in which:
Fig. 1 is a schematic block diagram showing electrical configurations of set information automatic restoring apparatus according to a first embodiment of the present invention;
Fig. 2 is a flowchart showing procedures for set information automatic correction by the set information automatic restoring apparatus according to the first embodiment of the present invention;
Fig. 3 is a schematic block diagram showing electrical configurations of set information automatic restoring apparatus according to a second embodiment of the present invention;
Fig. 4 is a schematic block diagram showing electrical configurations of set information automatic restoring apparatus according to a third embodiment of the present invention;
Fig. 5 is a flowchart showing procedures for set information automatic correction by the set information automatic restoring apparatus according to the third embodiment of the present invention; and
Fig. 6 is a schematic block diagram showing electrical configurations of set information automatic restoring apparatus according to a fourth embodiment of the present invention.

### DETAILED DESCRIPTION OF THE PREFERRED EMBODIMENTS

Best modes of carrying out the present invention will be described in further detail using various embodiments with reference to the accompanying drawings.

### First Embodiment

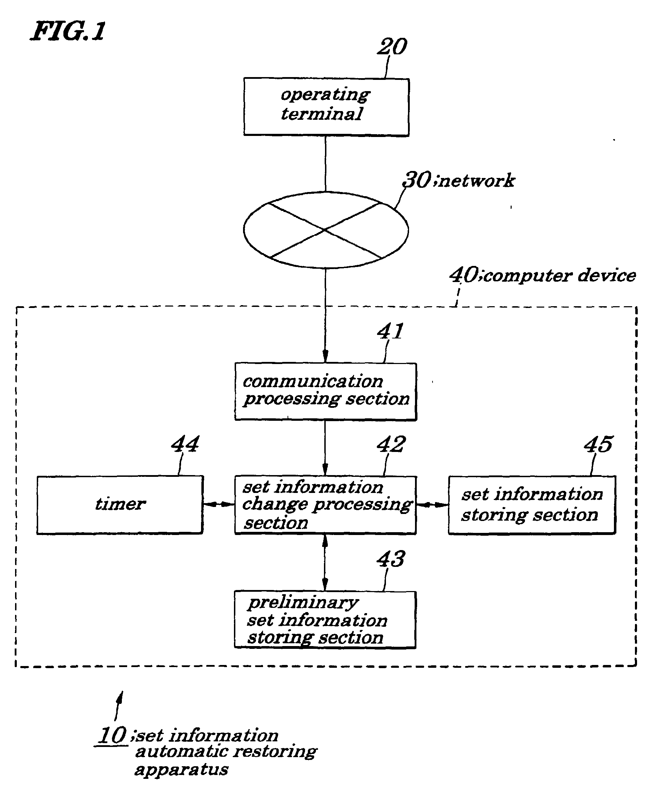

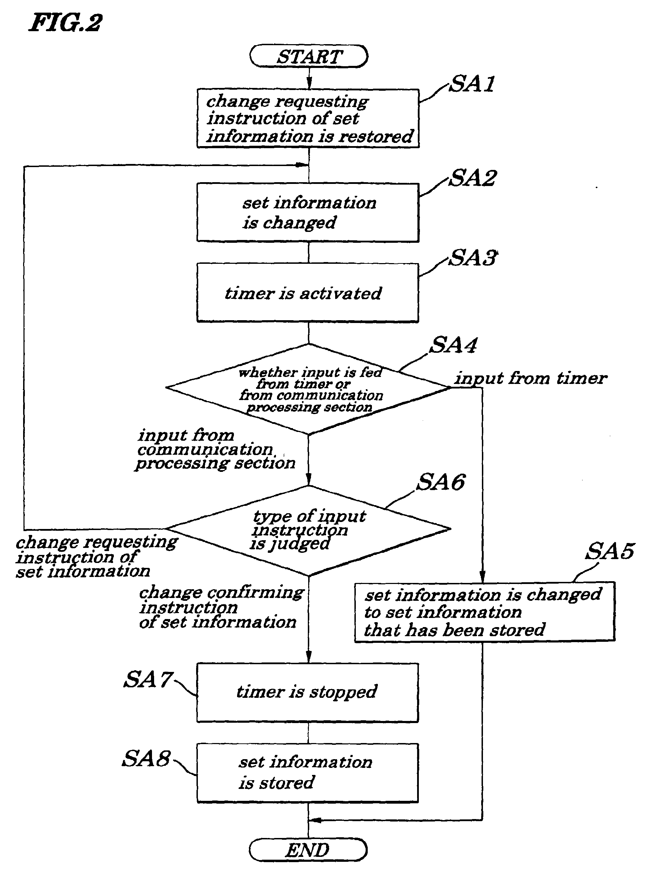

Figure 1 is a schematic block diagram showing electrical configurations of set information automatic restoring apparatus according to a first embodiment of the present invention. Figure 2 is a flowchart showing procedures for set information automatic correction of the set information automatic restoring apparatus according to the first embodiment of the present invention. In the set information automatic restoring apparatus, when set information is wrongly set and function of setting the set information is disabled, setting is redone so that wrongly set information is changed to correct set information. According to the first embodiment, the set information automatic restoring apparatus 10 is composed of an operating terminal 20 and a computer device 40 connected through a network 30 to the operating terminal 20. The computer device 40 is, for example, a router used in a computer network, a system configuration of which is variable depending on the set information. By changing system configuration, an operation in operational mode being different from that occurring before change is made is possible. The computer device 40 is chiefly composed of a communication processing section 41, a set information change processing section 42, a preliminary set information storing section 43, a timer 44 and a set information storing section 45. The operating terminal 20 is connected to the communication processing section 41 of the computer device 40 through the network 30.

The operating terminal 20 is adapted to input a change requesting instruction of the set information to the computer device 40 by an operator of the computer device 40 through the network 30 and to send a change confirming instruction to confirm whether the set information is correct or not, to the computer device 40. The communication processing section 41 receives the information from the operating terminal 20 through the network 30.

The set information storing section 45 stores the set information required to activate the computer device 40. The set information contains a constant, parameter, command, program or combinations of them. The preliminary set information storing section 43 stores the same information as stored in the set information storing section 45 at time of operation of the computer device 40.

The timer 44, when a predetermined time has elapsed after activation of the timer 44, outputs information notifying elapse of the predetermined time. The "predetermined time" represents a period during which the computer device 40 is not responsive due to wrong setting of the set information and during which an access to the computer device 40 is not allowable after the activation of the timer 44.

The set information change processing section 42 has a function of changing contents stored in the set information storing section 45 to the set information contained in the change requesting instruction when receiving the change requesting instruction of the set information from the communication processing section 41, a function of activating the timer 44 at a time of change and receiving the information notifying that the predetermined time has elapsed, a function of reading the set information contained in the preliminary set information storing section 43 when receiving the information notifying that the predetermined time has elapsed before receiving the change confirming instruction from the communication processing section 41 and storing the set information into the set information storing section 45 and a function of stopping the timer 44 and reading the set information which has received from the communication processing section 41 and has been stored in the set information storing section 45 and storing the set information into the preliminary set information storing section 43 when receiving the change confirming instruction from the communication processing section 41 before receiving information notifying that the predetermined time has elapsed from the timer 44.

The computer device 40 is provided with a ROM (Read-Only Memory) (not shown) in which a program adapted to execute procedures for the set information automatic correcting processing shown by the flowchart in Fig. 2 is stored. That is, the set information change processing section 42 reads the program from the ROM and carries out procedures for set information automatic Correcting processing shown in the flowchart.

Next, operations of the set information automatic restoring apparatus 10 according to the first embodiment will be described by referring to Figs. 1 and 2. When the set information contained in the computer device 40 is to be changed from the operating terminal 20, the oparator first has to input a change requesting instruction of the set information through the operating terminal 20. The change requesting instruction contains the set information. After the change requesting instruction of the set information is sent out, a change confirming instruction of the set information is input. Both the change requesting instruction and change confirming instruction of the set information are received by the communication processing section 41 of the computer device 40 through the network 30 and input to the set information change processing section 42 (Step SA1 in Fig. 2).

When the set information change processing section 42 receives the change requesting instruction of the set information from the communication processing section 41, contents of the set information storing section 45 are changed to the set information contained in transmitted change requesting instruction (Step SA2). At time of the change, the timer 44 is activated. The timer 44 starts counting down, for example, from the time set preliminarily by the oparator (Step SA3). An initial time value from which the counting-down starts is one set in advance to the timer 44 by the oparator through the network 30 from the operating terminal 20. The set information change processing section 42 judges whether the input is fed or not.

If the communication processing system 41 fails to transfer input fed from the operating terminal 20 to the set information change processing section 42 caused by operations of the computer device 40 in accordance with the set information (wrong set information) stored in the set information storing section 45, the set information change processing section 42, before receiving the change confirming instruction from the communication processing section 41, receives notification that the predetermined time has elapsed after the activation of the timer 44 (for example, the count value becomes zero) (Step SA4). At this point, the set information change processing section 42 reads the set information contained in the preliminary set information storing section 43 and stores it into the set information storing section 45, that is, redoes the setting of the set information and terminates processing (Step SA5). Thereafter, the computer device 40 operates under system configuration composed of the set information that has been set again as above.

The set information change processing section 42, when receiving the input from the communication processing section 41 before receiving the input (notification of a timeout) from the timer 44, judges whether the input is the change requesting instruction or the change confirming instruction of the set information (Step SA6). If the input is the change requesting instruction of the set information, the operation returns back to Step SA2 and then performs Step SA2 to SA4.

When the above input is one which is fed from the operating terminal 20 and which is the change confirming instruction, that is, authentication information of the set information (Step SA6), the timer 44 is stopped (Step SA7) and the set information that has been received from the communication processing section 41 and stored in the set information storing section 45 is read and is stored in the preliminary set information storing section 43 and procedure is terminated (Step SA8).

Thus, according to the first embodiment, when the change confirming instruction of the set information is not input from the operating terminal 20 through the network 30 and the communication processing section 41 after elapse of the predetermined time after the set information has been stored in the set information storing section 45 because the function of setting the set information has been disabled in the set information inputting system including the set information change processing section 42 due to the set information wrongly input from the operating terminal 20, since the set information change processing section 42 is adapted to store the set information already stored in the preliminary set information storing section 43 into the set information processing section 45, even if the set information has been set wrongly, wrongly set information is restored to a correct set information after the predetermined time. That is, even when function of setting the set information is disabled due to the set information wrongly set through the operating terminal 20 in the set information inputting system including the network 30 and communication processing section 41, since the set information can be restored to the correct information, it is not necessary to go to a place where the computer device 40 is installed and it is possible to perform efficient management of the computer device 40.

### Second Embodiment

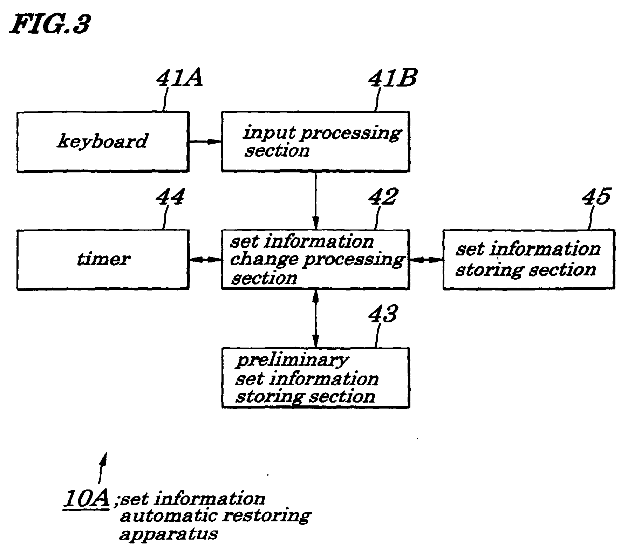

Figure 3 is a schematic block diagram showing electrical configurations of set information automatic restoring apparatus according to a second embodiment of the present invention. Configurations of the set information automatic restoring apparatus of the second embodiment differ greatly from those in the first embodiment in that a set information inputting device is provided in a computer device. The set information inputting device is composed of a keyboard 41A and an input processing section 41B.

The keyboard 41A is used to input change requesting instruction and change confirming instruction of set information. The input processing section 41B adjusts inputs from other inputting devices provided in set information automatic restoring apparatus 10A and to transfer input from the keyboard 41A to set information change processing section 42. Except those described above, configurations of the second embodiment are same as those of the first embodiment and same reference numbers in Fig. 3 designate corresponding parts in Fig. 1 and descriptions of those are omitted accordingly. Moreover, since procedures for processing of the set information automatic restoring apparatus 10A of the second embodiment are same as those of the first embodiment, operations in the second embodiment will be described by referring to Fig. 2 and Fig.3.

When the set information is changed from the keyboard 41A in the set information automatic restoring apparatus 10A, change requesting instruction and change confirming instruction of the set information are input from the keyboard 41A by an operator. The change requesting instruction includes the set information. Then, after the change requesting instruction of the set information is sent out, change confirming instruction of the set information is input. Both of these instructions are input from the keyboard 41A, received by the input processing section 41B and input to the set information change processing section 42 (Step SA1 in Fig. 2).

When the set information change processing section 42 receives the change requesting instruction of the set information from the keyboard 41A through the input processing section 41B, contents of set information storing section 45 are changed to that contained in the change requesting instructions (Step SA2). At a time of this change of the set information, timer 44 is activated and the timer 44 starts counting down, for example, from the time set preliminarily by the oparator (Step SA3). The set information change processing section 42 judges whether input is fed or not (Step SA4).

If the input processing system 41B fails to transfer the input fed from the keyboard 41A to the set information change processing section 42 due to operations of the set information automatic restoring apparatus 10A based in accordance with the set information (wrong set information) stored in the set information processing section 45, the set information change processing section 42, before receiving the change confirming instruction from the input processing section 41B, receives notification that the predetermined time has elapsed after activation of the timer 44 (Step SA4). At this point, the set information change processing section 42 reads the set information contained in preliminary set information storing section 43 and stores it into the set information storing section 45, that is, redoes setting of the set information and terminates processing (Step SA5). Thereafter, the set information automatic restoring apparatus 10A operates under system configuration composed of the set information that has been set again as above.

The set information change processing section 42, when receiving the input from the input processing section 41B before receiving input (notification of a timeout) from the timer 44, judges whether the input is change requesting instruction or the change confirming instruction of the set information (Step SA6). If input is the change requesting instruction of the set information, operation returns back to Step SA2 and then performs Step SA2 to SA4.

When the above input is one which is fed from the keyboard 41A and which is the change confirming instruction, that is, authentication information of the set information (Step SA6), the timer 44 is stopped (Step SA7) and the set information that has been received from the input processing section 41B and stored in the set information storing section 45 is read and is stored in the preliminary set information storing section 43 and procedure is terminated (Step SA8).

Thus, according to this embodiment, when the change confirming instruction of the set information is not input from the keyboard 41A through the input processing section 41B after elapse of the predetermined time since the set information has been stored in the set information storing section 45 because function of setting the set information is disabled in the set information inputting system including the input processing section 41B due to the set information wrongly input from the keyboard 41A, since the set information change processing section 42 is adapted to store the set information already stored in the preliminary set information storing section 43 into the set information processing section 45, even if the set information has been set wrongly, the wrongly set information is restored to correct set information after the predetermined time. That is, even when the function of setting the set information is disabled due to the set information wrongly set by the keyboard 41A in the set information inputting system including the input processing section 41B, since the set information can be restored automatically to correct information, it is possible to perform efficient management of computer device 40.

### Third Embodiment

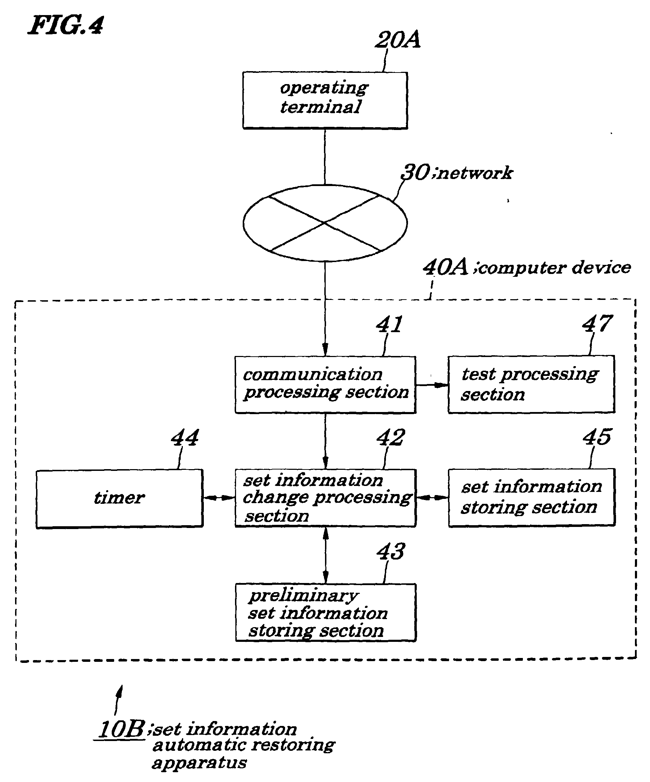

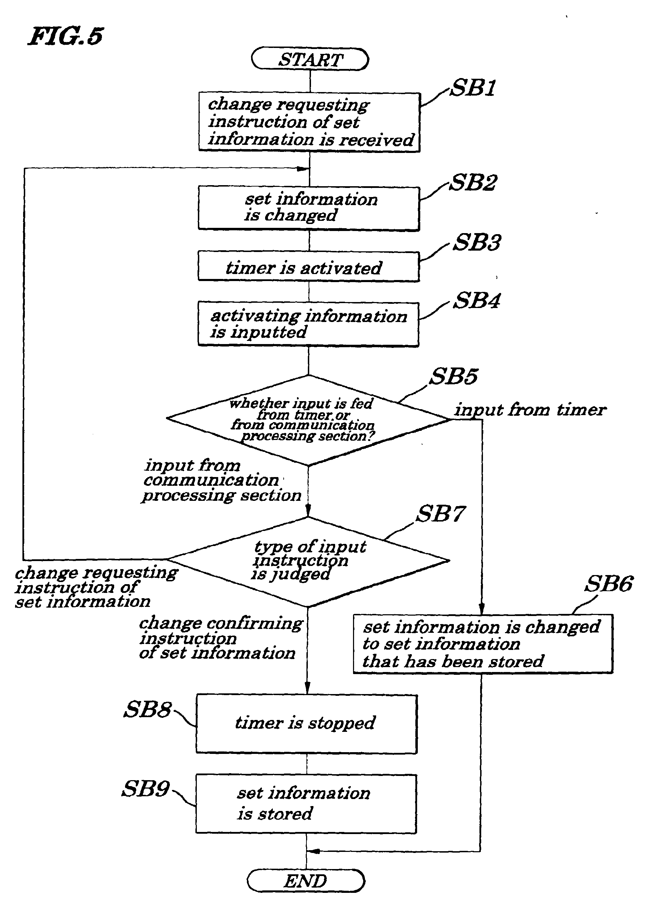

Figure 4 is a schematic block diagram showing electrical configurations of set information automatic restoring apparatus according to a third embodiment of the present invention. Figure 5 is a flowchart showing procedures for set information automatic correction by the set information automatic restoring apparatus according to the third embodiment of the present invention. Configurations of the set information automatic restoring apparatus of the third embodiment differ greatly from those in the first embodiment in that, when time required for an operation test exceeds a predetermined time since a start of a test in a case where a computer device operates in accordance with set information, the set information is restored to set information stored in the computer device.

That is, the information automatic restoring apparatus 10B is so configured that, while computer device 40A is operating in accordance with the set information that has been fed from operating terminal 20A through network 30 and stored in set information storing section 45 of the computer device 40A, when activating information adapted to activate a test function of test processing section 47 connected to communication processing section 41 is input from the operating terminal 20A through the network 30 and computer device 40A, causing the test processing section 47 to perform, in response to the activating information, a test on operations of the computer device 40A operating in accordance with the above set information, if the test drags on, causing measurement time of timer 44 to exceed a predetermined time after start of measurement, set information change processing section 42 is adapted to store the set information stored in preliminary set information storing section 43 into the set information storing section 45.

The computer device 40A is provided with a ROM (Read-Only Memory) (not shown) in which a program adapted to execute procedures for the set information automatic correcting processing shown by the flowchart in Fig. 5 is stored. The program is read from a computer constituting the computer device 40A and is executed by the computer to perform procedures for the set information automatic correcting processing shown by the flowchart in Fig. 5.

Except those described above, configurations of this embodiment are same as those of the first embodiment and same reference numbers in Fig. 4 designate corresponding parts in Fig. 1 and descriptions of those are omitted accordingly.

Next, operations in the third embodiment will be described by referring to Figs. 4 and 5.

When the set information is changed from the operating terminal 20A through the network 30 in the computer device 40A, change requesting instruction and change confirming instruction of the set information are input from the operating terminal 20A by an operator. The change requesting instruction includes the set information. Then, after the change requesting instruction of the set information is sent out, the change confirming instruction of the set information is input. Both of these instructions are input through the network 30, received by an input processing section 41B (Fig. 3) of the computer device 40A and input to the set information change processing section 42 (Step SB1 in Fig. 5).

When the set information change processing section 42 receives the change requesting instruction of the set information from the operating terminal 20A through the input processing section 41B, contents of the set information storing section 45 are changed to the set information contained in the change requesting instructions (Step SB2). At a time of the change of the set information, the timer 44 is activated and the timer 44 starts counting down, for example, from time set preliminarily by the operator (Step SB3). The activating information is then input from the operating terminal 20A (Step SB4). Activating information is input through the network 30 and the communication processing section 41 into the test processing section 47. Then, the test processing section 47 performs the operation test on the computer device 40A operating in accordance with the set information stored in the set information storing section 45. At this point, the set information change processing section 42 judges whether input is fed or not (Step SB5).

When the set information change processing section 42, before receiving change confirming instruction from the communication processing section 41, receives notification that the predetermined time has elapsed after the activation of the timer 44 due to dragging-on of the test on the operation in accordance with the set information stored in the set information storing section 45 (Step SB5), the set information change processing section 42 reads the set information contained in the preliminary set information storing section 43 and stores it into the set information storing section 45, that is, redoes setting of the set information and terminates processing (Step SB6). Thereafter, the computer device 40A operates under system configuration composed of the set information that has been set again as above.

The set information change processing section 42, when receiving input from the communication processing section 41 before receiving input (notification of a timeout) from the timer 44, judges whether the input is change requesting instruction of the set information or change confirming instruction of the set information (Step SB7). If the input is the change requesting instruction of the set information, the operation returns back to Step SB2 and then performs Step SB2 to SB5.

When the above input is one which is fed from the operating terminal 20 and which is the change confirming instruction, that is, authentication information of the set information (Step SB7), the timer 44 is stopped (Step SB8) and the set information that has been received from the communication processing section 41 and stored in the set information storing section 45 is read and is stored in the preliminary set information storing section 43 and the procedure is terminated (Step SB9).

Thus, according to this embodiment, the set information is set from the operating terminal 20A to the set information automatic restoring apparatus 10B to perform the test operation and if the change confirming instruction of the set information is not input within the predetermined time, since the set information change processing section 42 is adapted to store the set information stored in the preliminary set information storing section 43, a trial operation of the set information automatic restoring apparatus 10B in accordance with the set information can be made with a time limit.

Moreover, when the trial operation is made in accordance with the set information set to the set information automatic restoring apparatus 10B and then the trial operation is changed to its main operation, since the trial operation can be used as the main operation by inputting the change confirming instruction to the set information automatic restoring apparatus 10B, the set information automatic restoring apparatus 10B can be used effectively for the trial operation.

### Fourth Embodiment

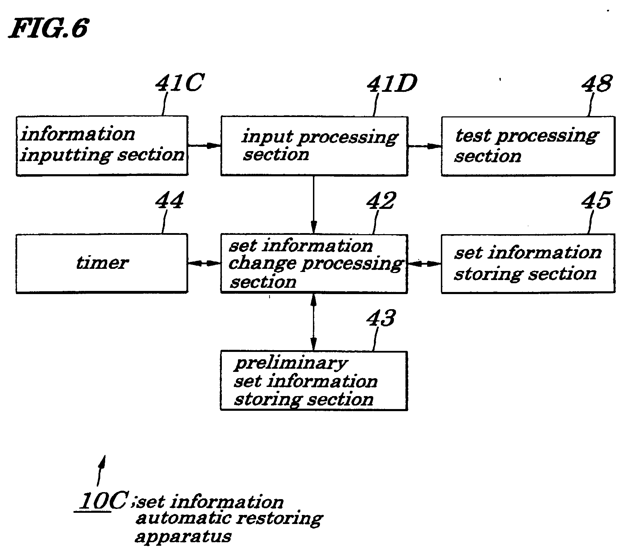

Figure 6 is a schematic block diagram showing electrical configurations of set information automatic restoring apparatus according to a fourth embodiment of the present invention. Configurations of the set information automatic restoring apparatus of the fourth embodiment differ greatly from those in the first embodiment in that a set information inputting device is provided in a computer device and, when the computer device operates in accordance with the set information, if time for a test operation on the computer device exceeds a predetermined time, the above set information is restored to set information stored in the computer device.

The set information inputting device is composed of an information inputting section 41C and an input processing section 41D. The information inputting section 41C is used to input a change requesting instruction, change confirming instruction and activating instruction of the set information. The input processing section 41D is used to adjust inputs fed from computer devices, that is, other inputting devices provided in set information automatic restoring apparatus 10C and to transfer inputs from the information inputting section 41C to a set information change processing section 42.

That is, while set information automatic restoring apparatus 10C is operating in accordance with the set information that has been fed from the information inputting section 41C and stored in set information storing section 45, when activating information adapted to activate a test function of a test processing section 48 connected to a communication processing section 41 (Fig. 4) is input from the information inputting section 41C through the input processing section 41D, causing the test processing section 48 to perform, in response to the activating information, if a test drags on, causing measuring time of a timer 44 to exceed a predetermined time after start of measurement, the set information change processing section 42 is adapted to store set information stored in a preliminary set information storing section 43 into the set information storing section 45.

Except those described above, configurations of this embodiment are same as those of the first embodiment and same reference numbers in Fig. 6 designate corresponding parts in Fig. 1 and descriptions of those are omitted accordingly. Moreover, since procedures for processing of the set information automatic restoring apparatus 10C of the fourth embodiment are same as those of the first embodiment, operations in the fourth embodiment will be described by referring to Fig. 5.

Next, operations in the fourth embodiment will be described by referring to Figs. 5 and 6.

When the set information in the set information automatic restoring apparatus 10C is changed from the information inputting section 41C through the input processing section 41D, change requesting instruction and change confirming instruction of the set information are input from the information inputting section 41C by an operator. The change requesting instruction includes the set information. Then, after the change requesting instruction of the set information is sent out, the change confirming instruction of the set information is input. Both of these instructions are received by the input processing section 41D of the set information automatic restoring apparatus 10C and input into the set information change processing section 42 (Step SB1 in Fig. 5).

When the set information change processing section 42 receives the change requesting instruction from the information inputting section 41C through the input processing section 41D, contents of the set information storing section 45 are changed to the set information contained in the change requesting instruction (Step SB2). At time of the change, the timer 44 is activated. The timer starts counting down, for example, from the time set preliminarily by the operator (Step SB3). The activating information is then input from the information inputting section 41C (Step SB4). The activating information is input through the input processing section 41D and activates the input processing section 41D. The test processing section 48 performs operation test on the set information automatic restoring apparatus 10C operating in accordance with the set information stored in the set information storing section 45. At this point, the set information change processing section 42 judges whether input is fed or not (Step SB5).

When the set information change processing section 42, before receiving change confirming instruction from the input processing section 41D, receives notification that the predetermined time has elapsed after activation of the timer 44 due to dragging-on of the test on operation in accordance with the set information stored in the set information storing section 45 (Step SB5), the set information change processing section 42 reads the set information contained in the preliminary set information storing section 43 and stores it into the set information storing section 45, that is, redoes setting of the set information and terminates processing (Step SB6). Thereafter, the set information automatic restoring apparatus 10C operates under the system configuration composed of the set information that has been set again as above.

The set information change processing section 42, when receiving input from the input processing section 41D before receiving input (notification of a timeout) from the timer 44, judges whether the input is the change requesting instruction or the change confirming instruction of the set information (Step SA7). If the input is the change requesting instruction of the set information, the operation returns back to Step SA2 and then performs Step SA2 to SA5.

When the above input is one which is fed from the information inputting section 41C and which is the change confirming instruction, that is, authentication information of the set information (Step SB7), the timer 44 is stopped (Step SB8) and the set information that has been received from the input processing section 41D and stored in the set information storing section 45 is read and is stored in the preliminary set information storing section 43 and procedure is terminated (Step SB9).

Thus, according to this embodiment, the set information is set from the information inputting section 41C to the set information automatic restoring apparatus 10C to perform the test operation and if the change confirming instruction of the set information is not input within the predetermined time, since the set information change processing section 42 is adapted to store the set information stored in the preliminary set information storing section 43, a trial operation of the set information automatic restoring apparatus 10C in accordance with the set information can be made with a time limit.

Moreover, when the trial operation is made in accordance with the set information set from the information inputting section 41C to the set information automatic restoring apparatus 10C and then the trial operation is changed to its main operation, since the trial operation can be used as the main operation by inputting the change confirming instruction to the set information automatic restoring apparatus 10C, the set information automatic restoring apparatus 10C can be used effectively for the trial operation.

As described above, according to the present invention, to cause a system to perform operations, set information causing the system to perform the operations is set in the system and time elapsed since the setting of the set information is measured. Since, when the measured time exceeds the predetermined time, confirming information for the set information being presently used is not input, original set information that has been stored in the system is set again and therefore even if wrongly set information is input from the set information inputting device causing a function of setting the set information in the set information inputting system to be disabled and even if the change confirming information of the set information is not input before the predetermined time elapses after the input set information is stored, the wrongly set information can be successfully restored to correct set information after a predetermined time.

Moreover, even if the set information is wrongly set to the system by the set information inputting device and therefore the function of setting the set information in the set information inputting system is disabled, since the restoring of the set information described above is made possible, the system can be effectively managed. Especially even when the computer system such as a router or a like to be used in the system is installed at a distant location, it is not necessary to actually go to a remote place where computer devices are installed, thus enabling an efficient management of the computer devices. Furthermore, according to the present invention, trial operation of the system by using the set information with a time limit is made possible. Also, when the trial operation by using the set information set to the system is made and then the trial operation is changed to a main operation, by utilizing the confirming information, the set information set for the trial operation can be used for the main operation, thus allowing the system to be effectively operated in trial mode.

It is apparent that the present invention is not limited to the above embodiments but may be changed and modified without departing from the scope and spirit of the invention. For example, the set information automatic restoring apparatus 10C may be so configured that the notification of timeout output from the timer 44 is output after the timer starts counting up and when its count value reaches the predetermined time. Moreover, the computer device may have configurations other than described above so long as it can be operated in accordance with the set information. System configuration may be one which is changed or operated depending on the set information. Furthermore, although, in the above embodiments, the change requesting instruction and change confirming instruction of the set information are used, information showing change request and change confirmation may be used instead.

Finally, the present application claims the priority of Japanese Patent Application No. Hei11-214736 filed on July 29, 1999, which is herein incorporated by reference.

## Claims

1. A method of automatically restoring set information which is changed and is currently used to original set information in a system so configured as to be operable in accordance with said set information which is set and changed, characterized by comprising steps of:
storing said original set information in said system;
inputting said set information to be set and setting said set information to said system;
measuring an elapsed time after said set information to be set is set; and
resetting said original set information stored in said system to said system when confirming information of said set information which is set and is used is not input though said elapsed time reaches a predetermined time.

2. The method of automatically restoring the set information according to Claim 1, characterized in that said confirming information is not input until said predetermined time elapses due to an error contained in said set information that is changed.

3. The method of automatically restoring the set information according to Claim 1, characterized in that said confirming information is not input until a required time for performing a specific operation in accordance with said set information which is changed reaches said predetermined time.

4. The method of automatically restoring the set information according to any one of Claims 1 through 3, characterized by further comprising a step of storing said set information in said system when said confirming information is input before said elapsed time reaches said predetermined time.

5. The method of automatically restoring the set information according to any one of Claims 1 through 4, characterized in that said set information is input through a network connected to said system.

6. The method of automatically restoring the set information according to any one of Claims 1 through 4, characterized in that said set information is input through a set information inputting means (20, 30, 41) provided in said system.

7. An apparatus for automatically restoring set information which is changed and is currently used to original set information in a system so configured as to be operable in accordance with said set information which is set and changed, characterized by comprising:
a storing means (42, 43, 45) for storing said original set information in said system;
an inputting means (20, 30, 41) for inputting said set information to be set and for setting said set information to said system;
a measuring means (44) for measuring an elapsed time after said set information to be set is set; and
a setting means (42) for resetting said original set information stored in said system by said storing means (42, 43, 45) in said system when confirming information of said set information that is set and used is not input though said elapsed time measured by said measuring means (44) reaches said predetermined time.

8. The apparatus for automatically restoring the set information according to Claim 7, characterized in that said setting means (42) operates when said confirming information is not input until said predetermined time elapses due to an error contained in said set information that is changed.

9. The apparatus for automatically restoring the set information according to Claim 7, characterized in that said setting means (42) operates when said confirming information is not input though a required time for performing a specific operation in accordance with said set information that is changed reaches said predetermined time.

10. The apparatus of automatically restoring the set information according to any one of Claims 7, 8 and 9, characterized in that said storing means (42, 43, 45) further stores said set information to said system when said confirming information is input before said elapsed time reaches said predetermined time.

11. The apparatus of automatically restoring the set information according to any one of Claims7 through 10, characterized in that said inputting means (20, 30, 41) is connected to said system through a network.

12. The apparatus of automatically restoring the set information according to any one of Claims 7 through 10, characterized in that said inputting means (20, 30, 41) is a set information inputting means in said system.

13. A computer-readable storage medium storing a set information automatic restoring program allowing a function stated in any one of Claims 7 through 12 to be executed by a computer.
